# EUROPEAN PATENT SPECIFICATION

(11) **EP 1 075 721 B1**
(45) Date of publication and mention of the grant of the patent: **02.07.2003**
(21) Application number: 99918245.4
(22) Date of filing: 29.04.1999
(51) Int. Cl.: H02G 7/08

(54) **A CABLE CLAMP**
KABELKLEMME
SERRE-CABLE

(30) Priority: 01.05.1998 IE 980333
(43) Date of publication of application: 14.02.2001
(73) Proprietor: Conway, Timothy Joseph, Glin, County Limerick (IE)
(72) Inventor: Conway, Timothy Joseph, Glin, County Limerick (IE)
(74) Representative: Ryan, Anne Mary
(86) International application number: IE9900029
(87) International publication number: WO99057792

(56) References cited:
- EP-A- 0 632 556
- US-A- 3 141 643
- US-A- 3 333 804

## Description

### Technical Field

This invention relates to clamps for cables, in particular to in-line cable clamps for cables such as electricity or telecommunications cables.

### Background Art

One of the most common mechanisms used to attach cables such as telecommunications cables (or telegraph wires) to telegraph poles is the J-hook support system.

The J-hook is extremely simple and is familiar to those skilled in the art. It essentially comprises a J-shaped element and a fixing bolt. The J-shaped element has coaxial bores extending through the long and short arms, such that the fixing bolt can be extended through the short arm, the long arm, and a bore in the telegraph pole. In use, the J-shaped element is affixed by the fixing bolt to the pole with the long arm affixed vertically adjacent to the pole, and the U-shaped section leading to the short arm extending outwards from the lower end of the long arm. The cable to be supported is rested on the U-shaped section when the bolt is being affixed, such that the fixing bolt closes the U-shaped portion of the J-shaped element and the cable is thereby attached relative to the pole.

In most cases, the long arm of the J-shaped element is provided with one or more additional apertures which receive secondary bolts which extend into the pole so as to prevent rotation of the J-hook around the axis defined by the fixing bolt (as might otherwise occur in high winds, for example).

This long established technology is advantageous for reasons of simplicity, ease of maintenance and low cost. However, problems are also associated with it, particularly with regard to cable damage. Cables tend to chafe and become worn at the point of contact with the J-hook. In countries where J-hook technology is in widespread use, it has been found that approximately 60% of all cable costs are attributable to replacement or repair of existing cable rather than the erection of new cables.

However as quite literally many millions of J-hooks are in use, the cost of replacing J-hook technology with a more sophisticated in-line cable support system may be uneconomical. The present invention addresses the problems associated with J-hook support systems in a cost-effective manner.

One proposal for solving this problem was proposed in IE Patent No. 73446 employing a cable support bracket with an open ended slot for hooking over the fixing bolt of the J-hook. Such support brackets could however be susceptible to dislodgement when cables whip around for example in stormy or windy conditions.

US-A-3,333,804 discloses a cable clamp and more particularly a clamp for use with an integrated messenger or "figure-8" telephone cable. The clamp includes a pair of jaw members each having at least one groove extending throughout its length adjacent and substantially parallel to one of the edge portions of the jaw member. In use the cable is gripped by the jaw members which are bolted together and the clamp in turn is bolted to a telegraph pole. The clamp may be mounted on the pole in association with a J-hook, which facilitates the installation of the cable. Initially the J-hook is secured to the pole by means of a nut and bolt. The cable is then strung between poles and rests on the U-shaped portion of the J-hook. Starting at a given pole, the lineman applies the clamp to the cable securing the jaw members thereto by means of nuts and bolts. The clamp is then positioned on the J-hook mounting bolt and a retaining nut endeavours to secure the clamp to this bolt.

A disadvantage of a clamp of this type is that, if the cable becomes separated from the clamp, for example in strong winds, it will fly free from the pole and may be damaged as a consequence.

### Disclosure of Invention

The invention therefore provides a clamp for supporting a cable on a conventional J-hook having long and short arms and a fixing bolt passing through both arms, comprising two or more co-operating body sections which together define a channel which accommodates a portion of the cable in.use, means for fastening said sections together, means for supporting the clamp on the conventional J-hook, the clamp being supported in use on the fixing bolt between both arms of the J-hook, and at least one of the body sections being provided with a spacer extension which defines the width of the clamp between the arms of the J-hook, characterised in that said support means comprises a bore extending along an axis substantially perpendicular to the axis of said channel through said body sections, the bore being of a size sufficient to receive the conventional J-hook fixing bolt, in that the spacer extension is formed integrally with the body section and defines the width of the clamp along the axis of the bore, and in that said width is slightly less than the inner dimension between the arms of the J-hook at the position where the clamp is suspended, such that in use the cable is supported relative to but not in contact with the J-hook.

The clamp provided by the invention has the advantage that by reliably and permanently supporting the cable out of contact with the J-hook, the problems associated with both chafing and dislodgement are overcome. This will reduce cable maintenance costs appreciably.

The provision of at least one of the body sections with a spacer extension results in a clamp which makes a snug fit within the J-hook and is prevented from moving about violently in extreme weather conditions. As telecommunications networks are generally standardised and often have been erected by a single state agency, fittings such as J-hooks are generally highly standardised and will be present in one or at most a few standard sizes. Therefore, only a small range of clamp sizes is required to refit the entire network.

Furthermore, as the clamp is adapted for use with existing J-hook technology, the replacement of the many millions of existing cable supports is unnecessary. A simple modification (i.e. fitting the clamp to the cable and the J-hook) will enable these supports to continue to be used.

The costs of alleviating the damage to cables caused by J-hooks, by fitting clamps according to the invention are far lower than the costs of replacing the J-hooks with an entirely new type of in-line cable support.

Preferably, a central portion of said channel is shaped to grip said portion of said cable when said body sections are fastened together.

Further, preferably, either end of the channel is of a belled shape to provide the cable with a degree of play at the ends of the channel.

It has been found that by providing a belled or flared shape to the ends of the channel, and thereby giving the portion of the cable entering or leaving the channel a degree of play or movement, the stresses on both the cable and the clamp are significantly reduced. This is particularly the case in windy or stormy conditions, when the cable may whip around violently and strong shear forces would otherwise be exerted on that part of the cable tightly gripped by the end portions of the channel.

Preferably, the fastening means comprises a nut and bolt arrangement and the body sections are provided with apertures positioned to receive said arrangement.

Further, preferably, means are provided for preventing rotation of a member of the nut and bolt arrangement relative to the body sections. This eases manipulation of the arrangement during assembly.

This is advantageously achieved by an embodiment in which the means for preventing rotation comprises one of said apertures being of non-circular cross-section, and one of the members of the nut and bolt arrangement having a portion thereof which is also of non-circular cross-section, said portion being received in said aperture such that when in position said member is prevented from rotating relative to said aperture.

In practical terms, this arrangement allows a worker to use one hand for tightening the nut and bolt arrangement, which makes it easier and safer to fit clamps at the top of a telegraph pole.

Preferably, said aperture is a polygonal aperture and said portion of said member is a portion of the shank of the bolt, the shank having a similarly polygonal cross-section and being dimensioned sufficiently smaller than the aperture to enable it to be received therein, but not sufficiently small to allow it to rotate relative to the aperture when positioned therein.

In a preferred embodiment, said aperture and said portion of the shank of said bolt are each of square cross-section.

Suitably, the body members are attached to one another with two substantially planar faces adjacent to one another, said faces being grooved to define said channel therebetween.

Optionally, the cross-section of the channel is of a closed shape. This enables the cable to be entirely accommodated within the channel, and the shape of the cross section can be chosen to match the cross-section of the cable. Internal surface features can be provided to increase grip.

In an alternative embodiment, the cross-section of the channel is of an open shape.

This allows part of the cable to extend laterally outside the channel and part to be accommodated within and optionally gripped by the channel.

In a further preferred embodiment, therefore, the cable to be gripped comprises a catenary or support strand attached to a parallel and substantially co-extensive signal carrying strand *via* connection means, and the clamp accommodates the catenary or support strand.

Cables of this type are widely used for carrying telecommunications signals, the catenary strand being used to impart strength and to assist in end termination (when the cable terminates, the signal-carrying strand and catenary strand can be stripped apart from one another and the catenary strand can be lashed around the terminal telegraph pole). According to this aspect of the invention, however, the catenary strand is additionally used for the purposes of in-line support.

Thus, when used with a double stranded cable of the type discussed above, the connection means may extend, in use, out of the channel, such that the catenary or support strand is accommodated within the channel and the signal-carrying strand depends from said catenary or support strand and is located, in use, externally of the clamp.

Preferably, said spacer extension is hollow such that the interior thereof defines said bore.

Suitably, the fastening means permits the cable to be gripped more tightly as the fastening means is tightened. This assists in the fitting of clamps according to the invention, as discussed below.

In another aspect of the invention there is provided a clamp assembly comprising a clamp according to the invention supported by a J-hook.

Thus the clamp of the present invention can be fitted as part of a clamp assembly or it can be "retro-fitted", i.e. added to existing J-hook supports.

The invention provides, in further aspect thereof, a method of supporting a cable relative to a J-hook having long and short arms and a fixing bolt passing through both arms, comprising the steps of gripping the cable in a clamp provided with gripping means and support means, and attaching said clamp to the J-hook fixing bolt *via* said support means within the U-shaped portion of the J-hook, characterised in that said support means comprises a bore extending through the clamp along an axis substantially perpendicular to the axis of said gripping means, the bore being of a size sufficient to receive the conventional J-hook fixing bolt, in that the clamp has a spacer extension formed integrally with a body section thereof, said spacer extension defining the width of the clamp along the axis of the bore, and in that said width is slightly less than the inner dimension between the arms of the J-hook at the position where the clamp is suspended, such that in use the cable is suspended relative to but not in contact with said J-hook.

Preferably, the clamp comprises at least two body sections which together define a channel which accommodates a portion of the cable and means for fastening said sections together, said fastening means allowing the cable to be gripped more tightly as the fastening means is tightened, and wherein the step of gripping the cable in the clamp comprises initially gripping the cable lightly such that the clamp is slidable relative to the cable, then sliding the clamp along the cable into position relative to the J-hook, and subsequently tightening the fastening means to grip the cable tightly when the clamp is correctly positioned.

The invention will be further illustrated by the following description of embodiments thereof, given by way of example only with reference to the accompanying drawings.

### Brief Description of Drawings

Fig. 1 is an elevation of a first body section forming part of a cable clamp according to the invention;
Fig. 2 is a cross-sectional view of the body section of Fig. 1, taken along the line II-II;
Fig. 3 is an elevation of a second body section forming part (together with the body section of Fig. 1) of a cable clamp according to the invention;
Fig. 4 is a cross-sectional view of the body section of Fig. 3, taken along the line IV-IV;
Fig. 5 is a cross-sectional view of the body sections of Figs. 1 and 3 in position for assembly together,
Fig. 6 is a cross-sectional view of a cable clamp according to the invention when installed in a J-hook to support a cable;
Fig. 7 is a front elevation of a telegraph pole on which a J-hook fitted with a cable clamp according to the invention;
Fig. 8 is a cross-sectional view of the assembly of Fig. 5, taken in the direction VIII-VIII, showing a cable gripped by the clamp;
Fig. 9 is an elevation of an alternative embodiment of a body section forming part of a cable clamp according to the invention;
Fig. 10 is a cross-sectional view of the body of Fig. 9, taken along the line IX-IX; and
Fig. 11 is a cross-sectional view of two body sections of Pigs. 9 and 10 in position for assembly together.

### Modes for Carrying Out the Invention

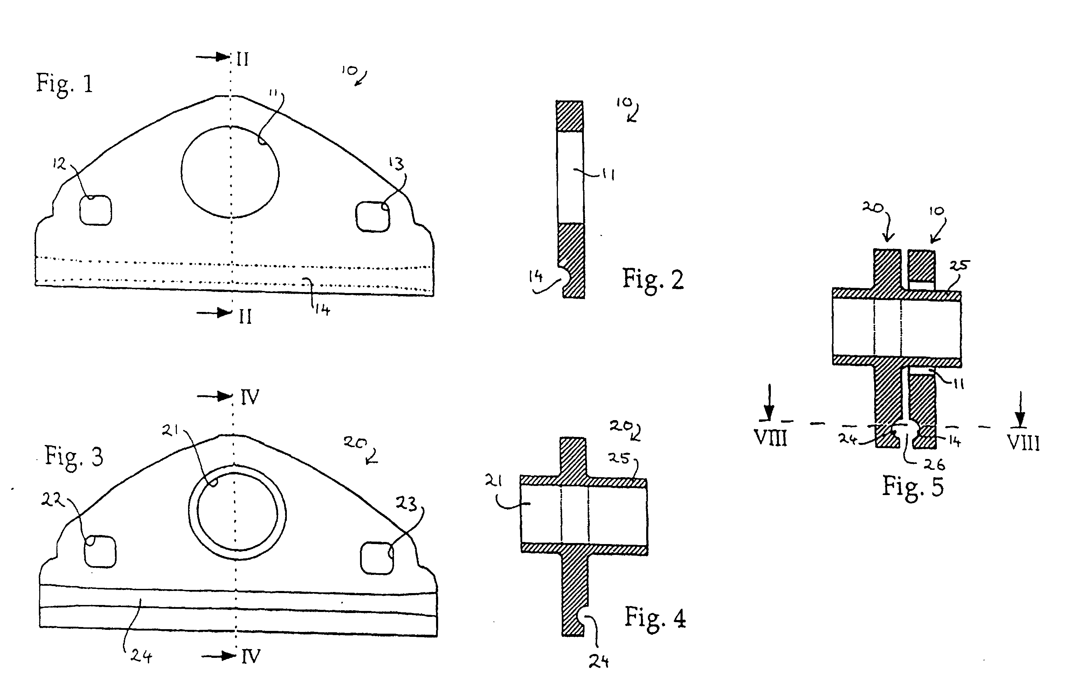

In Fig. 1 there is indicated, generally at 10, a first body section of a cable clamp according to the invention. The body section 10 is provided with a bore 11 forming part of the support means, and two apertures 12,13 which are adapted to receive square-spanked bolts, as described further below.

A groove 14 is provided on the reverse of the body section 10 (shown in dotted outline in Fig. 1). Referring additionally to Fig. 2 a cross-section of the body section 10 shows the bore 11 and the shape of the groove 14.

In Fig. 3, a second body section 20 is shown. The body section 20 is also provided with a bore 21, apertures 22,23 and a groove 24. Fig. 4 shows that the bore 21 is provided in a spacer 25 formed integrally with the otherwise substantially planar body section 20, the spacer 25 extending out from both faces of the body section 20.

Fig. 5 shows the body sections 10,20 in position for assembly together such that the spacer 25 protrudes through the bore 11 and such that the grooves 14,24 match up to form a channel 26. The apertures 12,13 (not shown in Fig. 5) in the body section 10 match up with the apertures 22,23 in the body section 20, such that a pair of bolts having a portion of their shanks of square cross-section can be passed through the overlapping pairs of apertures 12,22 and 13,23 to fasten the body sections 10,20 together when a complementary nut is applied to each bolt.

It will be appreciated that when the body sections 10,20 are tightened to one another, the channel 26 has an open cross-section, i.e. it has a keyhole shape the function of which is related to the cable which is to be held.

It will also be appreciated that the body sections can be progressively brought closer to one another by tightening the nut and bolt arrangements, such that when the nut and bolt arrangements are fastened loosely together, the channel can slidably hold a cable, but when they are tightened, the channel grips the cable tightly. Thus, a worker can attach the clamp loosely around a cable near an existing J-hook, loosely fastening the nut-and bolt arrangements, and then the clamp can be slid along the cable into position in the J-hook. Once the clamp is secured to the J-hook and all other adjustments have been made, the nuts can be tightened to securely grip the cable relative to but not in contact with the J-hook.

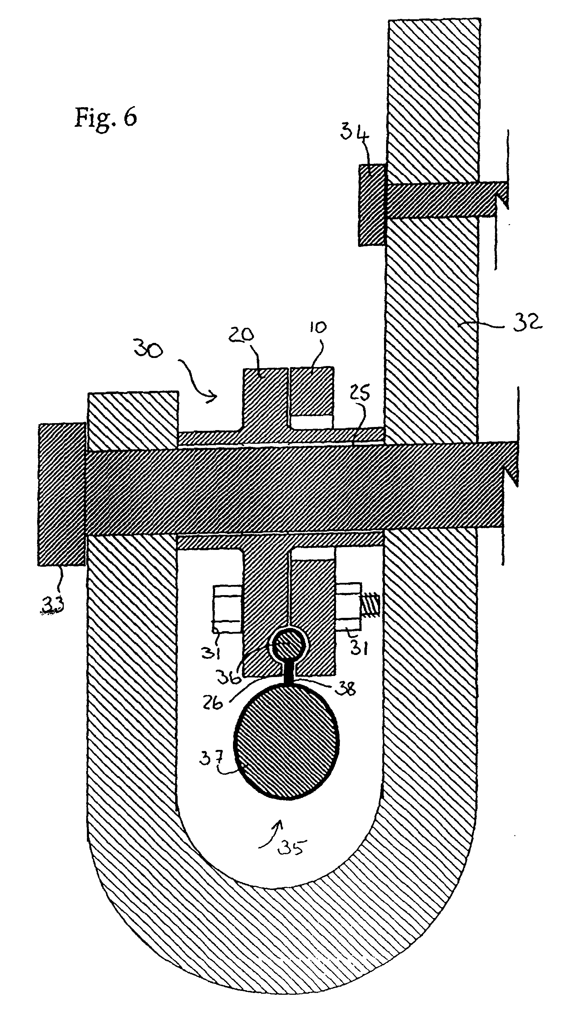

Referring now to Fig. 6, the clamp 30 comprising the body sections 10,20 and a pair of nut and bolt arrangements (one of which 31 is shown in Fig. 6) is illustrated in use.

A J-hook comprising a J-shaped element 32, fixing bolt 33 and secondary bolt 34 is shown. As the skilled person will appreciate, the J-shaped element 32 is generally mounted on a pole (not shown) by means of the fixing bolt 33 which extends through the pole, and the secondary bolt 34 (in practice two or more may be used) is inserted into the pole to prevent rotation of the J-shaped element 32 around the axis of the fixing bolt 33.

Whereas in the prior art, a cable (indicated generally at 35) is rested on the base of the U-shaped portion of the J-hook (defined below the fixing bolt 33), according to the present invention the cable clamp 30 is mounted on the fixing bolt 33 and the cable 35 is gripped by the clamp 30 such that in use the cable 35 is supported relative to but not in contact with the J-hook.

As can be seen, the spacer 25 is dimensioned both in terms of width and internal diameter to receive the fixing bolt 33 therethrough and to fit between the arms of the J-shaped element 32.

It can be seen that the cable 35 comprises a catenary or support strand 36 attached to a parallel and substantially co-extensive signal-carrying strand 37 *via* connection means 38. The keyhole shape of the open channel 26 allows the catenary strand 36 to be gripped therein and the connection means 38 to extend outside the channel 26, with the signal-carrying strand 37 depending therefrom.

It will be appreciated that a single strand cable could just as readily be accommodated entirely within the channel 26. If designed for such a cable, the channel would not require a keyhole shape and could instead be of a closed cross-section.

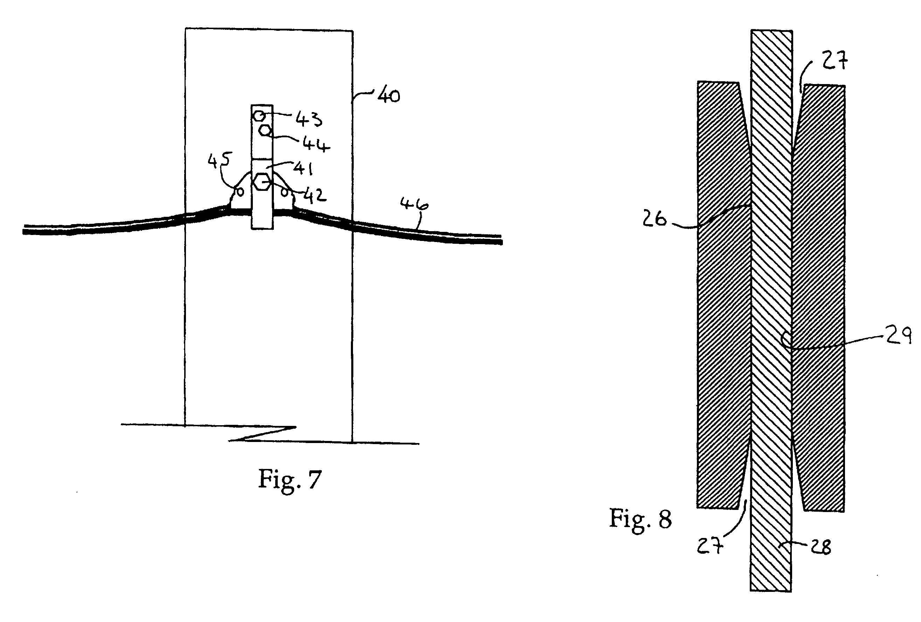

Fig. 7 shows a frontal view of a telegraph pole 40, on which a J-hook 41 is mounted by means of a fixing bolt 42 and a pair of secondary bolts 43,44. A cable clamp 45 according to the invention supporting a double stranded cable 46 is supported by the fixing bolt 42 as described above.

In Fig. 8, the belled or flared shape of the ends 27 of the channel 26 is shown. A cable 28 gripped by the central portion 29 of the channel 26 is thereby provided with a degree of play or movement at the ends 27 of the channel 26, thereby reducing the shear forces to which the cable would otherwise be subjected.

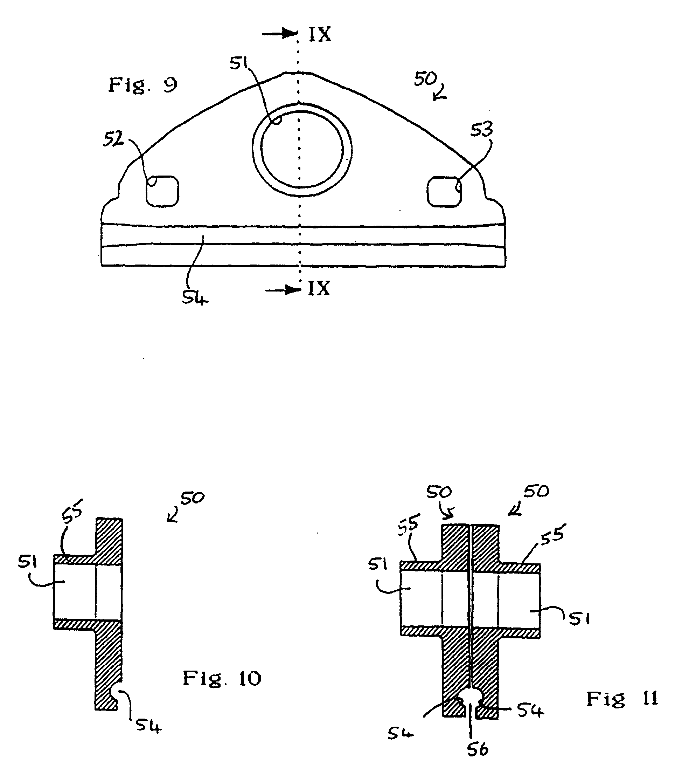

In Figs. 9 and 10, an alternative structure for a body section 50 is shown. The body section 50 is also provided with a bore 51 in a spacer 55 formed integrally with the otherwise substantially planar body section 50, apertures 52,53 and a groove 54. As can be seen the spacer 55 extends out from only one face of the body section 50.

Fig. 11 shows two such body sections 50 in position for assembly together such that the grooves 54 in each body section match up to form a channel 56. The apertures 52, 53 (not shown in Fig. 11) in each body section 50 match up such that a pair of bolts of square cross-section can be passed through the overlapping pairs of apertures 52 and 53 to fasten the body sections 50 together when a complementary nut is applied to each bolt The spacers 55 also match up "back to back" to provide a continuous bore 51-51 through the body sections 50 of the assembled clamp to accommodate the fixing bolt of a J-hook.

In use, the alternative embodiment illustrated in Figs 9, 10 and 11 operates in substantially the same manner as described above for Figs. 6, 7 and 8. As will readily be appreciated, this embodiment has certain economic advantages in that only one type of element is needed to provide both body sections comprising the clamp.

## Claims

1. A clamp (30) for supporting a cable (35) on a conventional J-hook having long and short arms and a fixing bolt (33) passing through both arms, comprising two or more co-operating body sections (10, 20; 50) which together define a channel (26; 56) which accommodates a portion (36) of the cable (35) in use, means for fastening said sections together (31), means for supporting the clamp (30) on the conventional J-hook, the clamp (30) being supported in use on the fixing bolt (33) between both arms of the J-hook, and at least one of the body sections (10,20; 50) being provided with a spacer extension (25; 55) which defines the width of the clamp (30) between the arms of the J-hook, **characterised in that** said support means comprises a bore (51) extending along an axis substantially perpendicular to the axis of said channel (26; 56) through said body sections (10,20; 50), the bore (51) being of a size sufficient to receive the conventional J-hook fixing bolt (33), **in that** the spacer extension (25; 55) is formed integrally with the body section (10,20; 50) and defines the width of the clamp (30) along the axis of the bore (51), and **in that** said width is slightly less than the inner dimension between the arms of the J-hook at the position where the clamp (30) is suspended, such that in use the cable (35) is supported relative to but not in contact with the J-hook.

2. A clamp according to Claim 1, wherein a central portion of said channel (26; 56) is shaped to grip said portion (36) of said cable (35) when said body sections (10, 20; 50) are fastened together.

3. A clamp according to Claim 1 or 2, wherein either end of the channel (26; 56) is of a belled shape to provide the cable (35) with a degree of play at the ends of the channel (26; 56).

4. A clamp according to any preceding claim, wherein the fastening means (31) comprises a nut and bolt arrangement (31) and the body sections (10, 20; 50) are provided with apertures (52, 53) positioned to receive said arrangement (31).

5. A clamp according to Claim 4, wherein means are provided for preventing rotation of a member of the nut and bolt arrangement (31) relative to the body sections.

6. A clamp according to Claim 5, wherein the means for preventing rotation comprises one of said apertures (52, 53) being of non-circular cross-section, and one of the members of the nut and bolt arrangement (31) having a portion thereof which is also of non-circular cross-section, said portion being received in said aperture (52, 53) such that when in position said member is prevented from rotating relative to said aperture (52, 53).

7. A clamp according to Claim 5 or 6, wherein said aperture (52, 53) is a polygonal aperture (52, 53) and said portion of said member is a portion of the shank of the bolt, the shank having a similarly polygonal cross-section and being dimensioned sufficiently smaller than the aperture (52, 53) to enable it to be received therein, but not sufficiently small to allow it to rotate relative to the aperture (52, 53) when positioned therein.

8. A clamp according to any one of Claims 5 to 7, wherein said aperture (52, 53) and said portion of the shank of said bolt are each of square cross-section.

9. A clamp according to any preceding claim, wherein the body members (10, 20; 50) are attached to one another with two substantially planar faces adjacent to one another, said faces being grooved to define said channel (26; 56) therebetween.

10. A clamp according to any preceding claim, wherein the cross-section of the channel is of a closed shape.

11. A clamp according to any one of Claims 1 to 9, wherein the cross-section of the channel (26; 56) is of an open shape.

12. A clamp according to Claim 11 wherein the cable (35) to be gripped comprises a catenary or support strand (36) attached to a parallel and substantially co-extensive signal-carrying strand (37) *via* connection means, and the clamp (30) accommodates the catenary or support strand (36).

13. A clamp according to any preceding claim, **characterised in that** said spacer extension (25; 55) is hollow such that the interior thereof defines said bore (51).

14. A clamp assembly comprising a clamp (30) according to any preceding claim, supported by a J-hook.

15. A method of supporting a cable (35) relative to a J-hook having long and short arms and a fixing bolt (33) passing through both arms, comprising the steps of gripping the cable (35) in a clamp (30) provided with gripping means and support means, and attaching said clamp (30) to the J-hook fixing bolt (33) *via* said support means within the U-shaped portion of the J-hook, **characterised in that** said support means comprises a bore (51) extending through the clamp (30) along an axis substantially perpendicular to the axis of said gripping means, the bore (51) being of a size sufficient to receive the conventional J-hook fixing bolt (33), **in that** the clamp (30) has a spacer extension (25; 55) formed integrally with a body section (10,20; 50) thereof, said spacer extension defining the width of the clamp (30) along the axis of the bore (51), and **in that** said width is slightly less than the inner dimension between the arms of the J-hook at the position where the clamp (30) is suspended, such that in use the cable (35) is supported relative to but not in contact with the J-hook.

16. A method according to Claim 15, wherein the clamp (30) comprises at least two body sections (10, 20; 50) which together define a channel (26; 56) which accommodates a portion of the cable (36) and means (31) for fastening said sections together, said fastening means (31) allowing the cable (35) to be gripped more tightly as the fastening means (31) is tightened, and wherein the step of gripping the cable (35) in the clamp (30) comprises initially gripping the cable (35) lightly such that the clamp (30) is slidable relative to the cable (35), then sliding the clamp (30) along the cable (35) into position relative to the J-hook, placing said fastening means (31) in position, and subsequently tightening the fastening means (31) to grip the cable (35) tightly when the clamp (30) is correctly positioned.

## Patentansprüche

1. Klemme (30) zum Halten eines Kabels (35) in einem herkömmlichen J-förmigen Haken mit einem langen und einem kurzen Arm und einem durch beide Arme gehenden Befestigungsbolzen (33), die Folgendes umfasst: zwei oder mehr zusammenwirkende Körperabschnitte (10, 20; 50), die gemeinsam einen Kanal (26; 56) definieren, der im Gebrauch einen Abschnitt (36) des Kabels (35) aufnimmt, ein Mittel, um die Abschnitte (31) aneinander zu befestigen, und ein Mittel zum Halten der Klemme (30) in einem herkömmlichen J-förmigen Haken, wobei die Klemme (30) im Gebrauch an dem Befestigungsbolzen (33) zwischen beiden Armen des J-förmigen Hakens gehalten wird und mindestens einer der Körperabschnitte (10, 20; 50) mit einer Abstandhalterverlängerung (25; 55) versehen ist, die die Breite der Klemme (30) zwischen den Armen des J-förmigen Hakens definiert, **dadurch gekennzeichnet, dass** das Haltemittel eine Bohrung (51) aufweist, die sich entlang einer zur Achse des Kanals (26; 56) durch die Körperabschnitte (10, 20; 50) im Wesentlichen senkrecht verlaufenden Achse erstreckt und die groß genug ist, den herkömmlichen J-förmigen Befestigungsbolzen (33) aufzunehmen, dass die Abstandhalterverlängerung (25; 55) einstückig mit dem Körperabschnitt (10, 20; 50) ausgebildet ist und die Breite der Klemme (30) entlang der Achse der Bohrung (51) definiert, und dass die Breite in der Position, in der die Klemme (30) aufgehängt ist, etwas geringer als die innere Abmessung zwischen den Armen des J-förmigen Hakens ist, sodass das Kabel (35) im Gebrauch bezüglich des J-förmigen Hakens, aber nicht in Kontakt damit gehalten wird.

2. Klemme nach Anspruch 1, bei der ein mittlerer Abschnitt des Kanals (26; 56) so gestaltet ist, dass er den Abschnitt (36) des Kabels (35) ergreift, wenn die Körperabschnitte (10, 20; 50) aneinander befestigt werden.

3. Klemme nach Anspruch 1 oder 2, bei der beide Enden des Kanals (26; 56) glockenförmig sind, damit das Kabel (35) an den Enden des Kanals (26; 56) ein gewisses Spiel hat.

4. Klemme nach einem der vorhergehenden Ansprüche, bei der das Befestigungsmittel (31) eine Anordnung (31) aus Bolzen und Mutter umfasst und die Körperabschnitte (10, 20; 50) Öffnungen (52, 53) aufweisen, die zur Aufnahme der Anordnung (31) positioniert sind.

5. Klemme nach Anspruch 4, bei der Mittel vorgesehen sind, die verhindern, dass sich ein Glied der Anordnung (31) aus Bolzen und Mutter bezüglich der Körperabschnitte dreht.

6. Klemme nach Anspruch 5, bei der bei dem Mittel zur Verhinderung einer Drehung vorgesehen ist, dass eine der Öffnungen (52, 53) keinen kreisförmigen Querschnitt hat und eines der Glieder der Anordnung (31) aus Bolzen und Mutter einen Abschnitt hat, der ebenfalls keinen kreisförmigen Querschnitt hat, wobei dieser Abschnitt in der Öffnung (52, 53) aufgenommen wird, sodass das Glied, wenn es sich in Position befindet, daran gehindert wird, sich bezüglich der Öffnung (52, 53) zu drehen.

7. Klemme nach Anspruch 5 oder 6, bei der es sich bei der Öffnung (52, 53) um eine polygonale Öffnung (52, 53) und bei dem Abschnitt des Glieds um einen Abschnitt des Bolzenschafts handelt, wobei der Schaft einen ähnlich polygonalen Querschnitt hat und ausreichend kleiner als die Öffnung (52, 53) dimensioniert ist, sodass er darin aufgenommen werden kann, aber nicht so klein, dass er sich bezüglich der Öffnung (52, 53) dreht, wenn er darin positioniert ist.

8. Klemme nach einem der Ansprüche 5 bis 7, bei der die Öffnung (52, 53) und der Abschnitt des Bolzenschafts jeweils einen quadratischen Querschnitt haben.

9. Klemme nach einem der vorhergehenden Ansprüche, bei der die Körperglieder (10, 20; 50) mit zwei im Wesentlichen ebenen, einander benachbarten Flächen aneinander angebracht sind, die zur Definierung des Kanals (26; 56) zwischen sich genutet sind.

10. Klemme nach einem der vorhergehenden Ansprüche, bei der der Querschnitt des Kanals eine geschlossene Form hat.

11. Klemme nach einem der Ansprüche 1 bis 9, bei der der Querschnitt des Kanals (26; 56) eine offene Form hat.

12. Klemme nach Anspruch 11, bei der das zu ergreifende Kabel (35) einen über Verbindungsmittel an einem parallelen und im Wesentlichen koextensiven Signalleitstrang (37) angebrachten Tragseil- oder Haltestrang (36) umfasst und die Klemme (30) den Tragseil- oder Haltestrang (36) aufnimmt.

13. Klemme nach einem der vorhergehenden Ansprüche, **dadurch gekennzeichnet, dass** die Abstandhalterverlängerung (25; 55) hohl ist, sodass ihr Inneres die Bohrung (51) definiert.

14. Klemmenanordnung mit einer von einem J-förmigen Haken gehaltenen Klemme (30) nach einem der vorhergehenden Ansprüche.

15. Verfahren zum Halten eines Kabels (35) bezüglich eines J-förmigen Hakens mit einem langen und einem kurzen Arm und einem durch beide Arme gehenden Befestigungsbolzen (33), bei dem man das Kabel (35) in einer mit einem Greifmittel und einem Haltemittel versehenen Klemme (30) ergreift und die Klemme (30) über das Haltemittel im U-förmigen Abschnitt des J-förmigen Hakens an dem J-förmigen Befestigungsbolzen (33) anbringt, **dadurch gekennzeichnet, dass** das Haltemittel eine Bohrung (51) aufweist, die sich entlang einer zur Achse des Greifmittels im Wesentlichen senkrecht verlaufenden Achse durch die Klemme (30) erstreckt und die groß genug ist, den herkömmlichen J-förmigen Befestigungsbolzen (33) aufzunehmen, dass die Klemme (30) eine Abstandhalterverlängerung (25; 55) aufweist, die einstückig mit einem Körperabschnitt (10, 20; 50) davon ausgebildet ist und die Breite der Klemme (30) entlang der Achse der Bohrung (51) definiert, und dass die Breite in der Position, in der die Klemme (30) aufgehängt ist, etwas geringer als die innere Abmessung zwischen den Armen des J-förmigen Hakens ist, sodass das Kabel (35) im Gebrauch bezüglich des J-förmigen Hakens, aber nicht in Kontakt damit gehalten wird.

16. Verfahren nach Anspruch 15, beim dem die Klemme (30) mindestens zwei Körperabschnitte (10, 20; 50) umfasst, die zusammen einen Kanal (26; 56) definieren, in dem ein Abschnitt des Kabels (36) und ein Mittel (31) zur Befestigung der Abschnitte aneinander aufgenommen wird, wobei das Kabel (35) dank des Befestigungsmittels (31) fester ergriffen werden kann, wenn das Befestigungsmittel (31) angezogen wird, und bei dem man beim Ergreifen des Kabels (35) in der Klemme (30) zunächst das Kabel (35) leicht ergreift, sodass die Klemme (30) bezüglich des Kabels (35) gleiten kann, dann die Klemme (30) am Kabel (35) entlang in Position bezüglich des J-förmigen Hakens schiebt und dabei das Befestigungsmittel (31) in Position bringt, und danach das Befestigungsmittel (31) anzieht, damit das Kabel (35) fest ergriffen wird, wenn die Klemme (30) korrekt positioniert ist.

## Revendications

1. Pince (30) pour supporter un câble (35) sur un crochet en J classique ayant des branches longue et courte et une cheville de fixation (33) traversant les deux branches, comprenant au moins deux éléments de corps coopérants (10, 20 ; 50) qui définissent ensemble un conduit (26 ; 56) qui loge une partie (36) du câble (35) en service, des moyens pour fixer ces éléments ensemble (31), des moyens pour supporter la pince (30) sur le crochet en J classique, la pince (30) étant supportée en service sur la cheville de fixation (33) encre les deux branches du crochet en J, et au moins un des éléments de corps (10, 20 ; 50) étant muni d'une rallonge d'entretoisement (25 ; 55) qui définit la largeur de la pince (30) encre les branches du crochet en J, **caractérisée en ce que** les moyens de support comprennent un alésage (51) s'étendant selon un axe sensiblement perpendiculaire à l'axe du conduit (26 ;56) à travers les éléments de corps (10, 20 ; 50), l'alésage (51) étant d'une taille suffisante pour recevoir la cheville de fixation (33) du crochet en J classique, **en ce que** la rallonge d'entretoisement (25 ; 55) est formée d'un seul tenant avec l'élément de corps (10, 20 ; 50) et définit la largeur de la pince (30) le long de l'axe de l'alésage (51), et **en ce que** cette largeur est légèrement inférieure à la dimension intérieure entre les branches du crochet en J à l'endroit où la pince (30) est suspendue, de façon qu'en service le câble (35) soit supporté par rapport au crochet en J sans être en contact avec celui-ci.

2. Pince selon la revendication 1, dans laquelle une partie centrale du conduit (26 ; 56) est conformée pour tenir ladite partie (36) du câble (35) lorsque les éléments du corps (10, 20 ; 50) sont fixés ensemble.

3. Pince selon la revendication 1 ou 2, dans laquelle chaque extrémité du conduit (26 ; 56) est en forme de cloche pour donner au câble (35) un degré de jeu aux extrémités du conduit (26 ; 56).

4. Pince selon l'une quelconque des revendications précédentes, dans laquelle les moyens de fixation (31) comprennent un agencement tige-écrou (31) et les éléments du corps (10, 20 ; 50) sont munis d'ouvertures (52 ,53) positionnées pour recevoir cet agencement (31).

5. Pince selon la revendication 4, dans laquelle des moyens sont prévus pour empêcher la rotation d'un organe de l'agencement tige-écrou (31) par rapport aux éléments du corps.

6. Pince selon la revendication 5, dans laquelle les moyens pour empêcher la rotation comprennent le fait que l'une desdites ouvertures (52 ,53) est de section transversale non-circulaire, et l'un des organes de l'agencement tige-écrou (31) comporte une partie qui est également d'une section transversale non circulaire, cette partie étant reçue dans ladite ouverture (52, 53) de sorte qu'une fois en position ledit organe est empêché de tourner par rapport à ladite ouverture (52, 53).

7. Pince selon la revendication 5 ou 6, dans laquelle ladite ouverture (52, 53) est une ouverture polygonale (52, 53), et ladite partie dudit organe est une partie du fût de la tige, le fût ayant une section transversale semblablement polygonale et étant dimensionné suffisamment plus petit que l'ouverture (52, 53) pour lui permettre d'y être reçu, mais pas suffisamment petit pour lui permettre de tourner par rapport à l'ouverture (52, 53) une fois positionné dedans.

8. Pince selon l'une quelconque des revendications 5 à 7, dans laquelle ladite ouverture (52, 53) et ladite partie du fût de la tige sont chacune de section transversale carrée.

9. Pince selon l'une quelconque des revendications précédentes, dans laquelle les éléments de corps (10, 20 ; 50) sont attachés l'un à l'autre par deux faces sensiblement planes adjacentes l'une à l'autre, rainurées pour définir le conduit (26 ; 56) entre elles.

10. Pince selon l'une quelconque des revendications précédentes, dans laquelle la section transversale du conduit est de forme fermée.

11. Pince selon l'une quelconque des revendications 1 à 9, dans laquelle la section transversale du conduit (26 ; 56) est de forme ouverte.

12. Pince selon la revendication 11, dans laquelle le câble (35) à tenir comprend un cordon support ou caténaire (36) attaché à un cordon porteur de signal (37) parallèle et sensiblement en co-extension, par l'intermédiaire de moyens de liaison, et la pince (30) reçoit le cordon support ou caténaire (36).

13. Pince selon l'une quelconque des revendications précédentes, **caractérisée en ce que** la rallonge d'entretoisement (25 ; 55) est creuse de sorte que son intérieur définit l'alésage (51).

14. Ensemble de pincement comprenant une pince (30) selon l'une quelconque des revendications précédentes, supportée par un crochet en J.

15. Procédé pour supporter un câble (35) relativement à un crochet en J ayant des branches longue et courte et une cheville de fixation (33) traversant les deux branches, comprenant les étapes suivantes : tenir le câble (35) dans une pince (30) munie de moyens de tenue et de moyens de support, et attacher cette pince (30) à la cheville de fixation (33) du crochet en J par l'intermédiaire des moyens de support à l'intérieur de la partie en U du crochet en J, **caractérisé en ce que** les moyens de support comprennent un alésase (51) s'étendant à travers la pince (30) selon un axe sensiblement perpendiculaire à l'axe des moyens de tenue, l'alésage (51) étant d'une taille suffisante pour recevoir la cheville de fixation (33) du crochet en J classique, **en ce que** la pince (30) possède une rallonge d'entretoisement (25 ; 55) formée d'un seul tenant avec un élément de corps (10, 20 ; 50) de la pince, cette rallonge d'entretoisement définissant la largeur de la pince (30) le long de l'axe de l'alésage (51), et **en ce que** ladite largeur est légèrement inférieure à la dimension intérieure entre les branches du crochet en J à l'endroit où la pince (30) est suspendue, de sorte qu'en service le câble (35) soit supporté par rapport au crochet J sans être en contact avec celui-ci.

16. Procédé selon la revendication 15, dans lequel la pince (30) comprend au moins deux éléments de corps (10, 20 ; 50) qui définissent ensemble un conduit (26 ; 56) qui loge une partie du câble (36) et des moyens (31) pour fixer ces éléments ensemble, ces moyens de fixation (31) permettant au câble (35) d'être tenu plus fermement à mesure que les moyens de fixation (31) sont serrés, et dans lequel l'étape de tenir le câble (35) dans la pince (30) comprend : tenir initialement le câble (35) de telle façon légère que la pince (30) soit coulissante par rapport au câble (35), puis faire glisser la pince (30) le long du câble (35) en position par rapport au crochet en J, placer les moyens de fixation (31) en position, puis serrer les moyens de fixation (31) pour tenir fermement le câble (35) une fois la pince (30) correctement positionnée.
